Europäisches Patentamt

European Patent Office

Office européen des brevets

(11) Veröffentlichungsnummer: **0 262 588**

**A2**

## (12) EUROPÄISCHE PATENTANMELDUNG

(21) Anmeldenummer: 87113956.4

(22) Anmeldetag: 24.09.87

(51) Int. Cl.4: **B01D 19/04 , B01J 2/22**

(30) Priorität: 02.10.86 DE 3633519

(43) Veröffentlichungstag der Anmeldung:
06.04.88 Patentblatt 88/14

(84) Benannte Vertragsstaaten:
AT BE CH DE ES FR GB IT LI NL

(71) Anmelder: Henkel Kommanditgesellschaft auf Aktien
Postfach 1100 Henkelstrasse 67
D-4000 Düsseldorf-Holthausen(DE)

(72) Erfinder: Schulz, Paul, Dr.
Gräfrather Strasse 23a
D-5600 Wuppertal 11(DE)
Erfinder: Waldmann, Jürgen
Robert-Koch-Strasse 26
D-4019 Monheim(DE)
Erfinder: Carduck, Franz-Josef, Dr.
Landstrasse 18
D-5657 Haan(DE)
Erfinder: Witthaus, Martin, Dr.
Burgmüllerstrasse 7
D-4000 Düsseldorf(DE)
Erfinder: Schmadel, Edmund, Dr.
Hüschelrath 9
D-5653 Leichlingen(DE)

(54) Verfahren zur Herstellung von rieselfähigen, stabilen Schauminhibitor-Konzentraten durch kompaktierende Granulation.

(57) Rieselfähige, teilchenförmige Schauminhibitor-Konzentrate, die im Gemisch mit oberflächenaktiven Stoffen bzw. starken Alkalien keinen Wirkungsverlust erleiden, werden hergestellt, indem man 1 bis 20 Gew.-% des Schauminhibitors mit 80 bis 99 Gew.-% eines wasserlöslichen Salzes oder Salzgemisches, das ggf. Konfektionierungsmittel enthält und in 1 %iger wäßriger Lösung einen pH-Wert von 6 bis 9,5 aufweist, unter erhöhtem Druck kompaktiert und das Kompaktat anschließend auf eine mittlere Teilchengröße von 0,1 bis 2 mm zerkleinert. Der angewendete Druck soll den Grenzdruck, bei dem keine weitere Verdichtung auftritt, nicht wesentlich überschreiten. Ferner soll die quecksilberporosimetrisch gemessene Teilchenporosität unter 10 % liegen. Als Schauminhibitoren werden Paraffinkohlenwasserstoffe, Organopolysiloxane und ihre Gemische mit feinteiligen hydrophoben Feststoffen, insbesondere feinteilige Kieselsäure, eingesetzt.

## "Verfahren zur Herstellung von rieselfähigen, stabilen Schauminhibitor-Konzentraten durch kompaktierende Granulation"

Schauminhibitoren aus der Klasse der Organopolysiloxane, der Paraffinkohlenwasserstoffe und ihrer Gemische mit mikrofeiner Kieselsäure, die vorzugsweise hydrophobiert bzw. silaniert ist, finden häufig Verwendung in tensidhaltigen bzw. stark alkalischen Wasch-und Reinigungsmitteln. Der unmittelbare Kontakt der Schauminhibitoren mit den oberflächenaktiven Verbindungen oder Waschalkalien führt jedoch während der Lagerung dieser Mittel häufig zu einem starken Wirkungsverlust. Man hat daher vorgeschlagen, die Schauminhibitoren an poröse Trägermaterialien zu adsorbieren bzw. in wasserlösliche Trägerstoffe einzubetten und mit wasserlöslichen Hüllmaterialien zu umhüllen, um eine schädliche Interaktion mit den Reinigungsmittelbestandteilen zu verhindern. Derartige, meist mehrstufige Arbeitsweisen sind jedoch verhältnismäßig aufwendig, und die Verfahrensprodukte besitzen vielfach eine verringerte Auflösungsgeschwindigkeit in Wasser mit der Folge, daß der Schauminhibitor verzögert freigesetzt und der Schaum in der Lösung in der Anfangsphase nur unzureichend gedämpft wird.

Die vorliegende Erfindung vermeidet diese Nachteile.

Gegenstand der Erfindung ist ein Verfahren zur Herstellung eines rieselfähigen Schauminhibitor-Konzentrates, dadurch gekennzeichnet, daß man ein inniges Gemisch, bestehend aus (auf wasserfreie Substanz bezogen):

a) 1 bis 20 Gew.-% mindestens eines Schauminhibierungsmittels aus der Klasse der Paraffinkohlenwasserstoffe, der Organopolysiloxane und ihrer Gemische mit feinteiligen, hydrophoben Feststoffkomponenten, insbesondere silanierter Kieselsäure und

b) 80 bis 99 Gew.-% eines wasserlöslichen Salzes oder eines in der Hauptsache aus Salzen unter Zusatz geeigneter Konfektionierungshilfsmittel bestehenden Gemisches, das in 1%iger wäßriger Lösung einen pH-Wert von 6 bis 9,5 aufweist, unter erhöhtem Druck kompaktiert und dabei den Grenzdruck nicht wesentlich überschreitet, bei dem eine weitere Verdichtung nicht mehr auftritt, worauf man das Kompaktat, dessen quecksilberporosimetrisch gemessene Teilchen-Gesamtporosität unter 10 %, vorzugsweise unterhalb 7 % liegt, auf eine mittlere Korngröße von 0,1 bis 2 mm zerkleinert.

Als Schauminhibitoren (Komponente a) eignen sich Paraffine und Paraffingemische, z. B. Flüssigparaffine, Weichparaffine, Hartparaffine und mikrokristalline Wachse sowie ihre Gemische mit hydrophoben, feinverteilten, Festkomponenten, z. B. hydrophobierter bzw. silanierter Kieselsäure bzw. Organopolysiloxanen, so wie sie z. B. in DE-A 25 00 411, DE-A 26 50 365, DE-A 28 57 155, EP-A 150 386 und EP-A 63 346 offenbart sind. Weitere brauchbare Schauminhibitoren sind Organosiloxane und ihre vielfältigen Abwandlungsprodukte, ferner Polysiloxanharze und insbesondere deren Gemische mit mikrofeiner, pyrogener oder durch Fällung gewonnener Kieselsäure, die hydrophobiert bzw. silaniert sein kann, ferner Gemische aus Polysiloxanen, Polysiloxanharzen und den genannten Kieselsäuren. Beispiele hierfür finden sich in US 3,933,672 und DE-A 34 27 496.

Die genannten Schauminhibitoren werden in Mengen von 1 bis 20 Gew.-%, vorzugsweise von 2 bis 10 Gew.-% in das Vorgemisch eingesetzt.

Als wasserlösliche Salze (Komponente b) eignen sich solche, die in 1%iger wäßriger Lösung einen pH-Wert von 6 bis 9 aufweisen und vorzugsweise nicht hygroskopisch sind, insbesondere Sulfate, Chloride, Phosphate und Acetate des Natriums und/oder Kaliums, wie wasserfreies bzw. kristallwasserhaltiges Natriumsulfat sowie deren Gemische, Natriumchlorid, Kaliumsulfat, Kaliumchlorid, Natriumacetat, Mononatrium-bzw. Dinatriumorthophosphat, Monokalium-bzw. Dikaliumorthophosphat, Natriumacetat, Kaliumacetat sowie Gemische derartiger Salze. Als besonders geeignet hat sich wasserfreies Natriumsulfat erwiesen.

Die Salze, die in das Gemisch eingebracht werden, weisen zweckmäßigerweise eine Korngröße von 0,01 bis 2 mm, vorzugsweise von 0,1 bis 0,5 mm auf. Die Schauminhibitoren liegen vielfach in flüssiger oder pastöser Form vor und können in dieser Form in die Mischung eingebracht werden. Sofern sie in fester, z. B. Blockform oder in pulvriger oder granularer Form vorliegen, können sie entweder aufgeschmolzen und über geeignete Ein-oder Zweistoffdüsen auf das z. B. mechanisch umgewälzte oder verwickelte kalte Trägermaterial aufgetragen werden oder im Fall von Wirkstoffpulvern (z. B. Entschäumerprills) in fester Form kalt zugemischt werden, wobei ihre Korngröße zweckmäßigerweise im Bereich von 0,001 bis 0,2 mm, vorzugsweise von 0,01 bis 0,1 mm liegt. Nach einem gleichermaßen bevorzugten Verfahren wird das Substratgemisch vorgeheizt, mit der Wirkstoffschmelze bei 40 bis 150 °C innig vermischt und mit oder ohne Zwischenkühlung weiterverarbeitet. Für die Herstellung und Homogenisierung des Vorgemisches eignen sich übliche Mischvorrichtungen. Das Mischen kann ggf. auch in der Kompaktierungsvorrichtung, z. B. einer Schneckenpresse erfolgen, in welche die Materialströme kontinuierlich eingegeben werden.

Während des Mischprozesses können auch geringe Mengen Wasser zugesetzt werden, um die Plastifizierbarkeit zu verbessern. Die Menge dieses Zusatzes kann bis zu 15 %, vorzugsweise 5 bis 10 Gew.-%, bezogen auf das Gemisch, betragen.

Feste Zusätze, wie disperse Kieselsäuren, Zeolith-und/oder Schichtsilikatpulver, ferner auch übliche Sprengmittel können das Löseverhalten des Granulats regulieren und weitere Produktmerkmale wie Abriebfestigkeit beeinflussen.

Weiterhin können dem Gemisch bekannte Plastifizierungs-, Quell-oder Bindemittel zugesetzt werden. Hierzu eignen sich z. B. wasserlösliche Polymere, wie Cellulose-oder Stärkeether, Polyglykolether bzw. homo-oder copolymere Vinyl-Carbonsäuren bzw. deren Salze, die z. B. Acrylsäure, Methacrylsäure und/oder Maleinsäure als Grundelemente enthalten. In die zu kompaktierende Vormischung können ferner auch Stoffe wie Stärke, Gelatine, Gummiarabikum, Seifen und geeignete tensidische Komponenten eingearbeitet werden, die eine optimale Verteilung des schaumregulierenden Agens im Vorgemisch, eine porenfreie Verdichtung im Kompaktierprozeß und hohe mechanische Stabilität (Härte, Abriebfestigkeit) der Granalien bewirken. Der Anteil dieser Zusätze kann bis 25 Gew.-% betragen, sollte aber zweckmäßigerweise maximal bei 15 % liegen. Weiterhin können Farbstoffe oder Farbpigmente zugegeben werden.

Zum Kompaktieren eignen sich z. B. Walzenstühle, Schneckenpressen und Pelletiervorrichtungen.

Bei Verwendung von Walzenstühlen wird das zu granulierende Gut unter Preßdruck durch den Spalt eines Paares zweier mit etwa gleicher Umfanggeschwindigkeit gegensinnig laufender Glatt-oder Profilwalzen geführt und dabei zu einem glatten oder strukturierten plattenförmigen Preßgut verdichtet. Dieses platten-bzw. bandförmige Preßgut, das auch als "Schülpenband" bezeichnet wird, wird anschließend einem Zerkleinerungsverfahren unterworfen und dabei gekörntes Gut der gewünschten Korngröße und Kornverteilung gewonnen. Die Zerkleinerung des platten-bzw. bandförmigen Gutes kann in einer Mühle erfolgen. Zweckmäßigerweise wird das zerkleinerte Material anschließend einem Sichtungsprozeß zugeführt. Zu grobes Material wird abgetrennt und in die Zerkleinerungsvorrichtung rückgeführt, während zu feines Material dem Ansatz des pulverförmigen Mischgutes beigegeben und erneut der Kompaktierung im Walzenspalt zugeführt wird.

Die Verpressung kann auf entsprechend gebauten Walzenpaaren im Unterschied zum Schülpenband auch zu nicht zusammenhängenden Kompaktatkörpern, z. B. Briketts, führen.

Die Walzenverpressung kann generell ohne oder mit einer Vorverdichtung des vorgemischten pulverförmigen Gutes erfolgen. Das Walzenpaar kann dabei in jeder beliebigen Raumrichtung, insbesondere also vertikal oder horizontal zueinander angeordnet sein. Das pulverförmige Gut wird dann entweder durch Schwerkraftfüllung oder mittels einer geeigneten Einrichtung, z. B. mittels einer Stopfschnecke dem Walzenspalt zugeführt.

Der Preßdruck im Walzenspalt und die Verweildauer des Materials in dem Bereich des Preßdruckes sind so hoch einzustellen, daß ein gut ausgebildetes hartes Schülpenband mit hoher Dichte erzeugt wird. Der hohe Verdichtungsgrad ist dabei anzustreben, um die gewünschten Schüttgewichte des letztlich gewonnenen rieselfähigen Gutes einzustellen, die oberhalb von 600 g/l, vorzugsweise oberhalb von 900 g/l, liegen sollen. Auch die Abriebsstabilität der Granulate wird durch den Verdichtungsgrad beeinflußt, hohe Verdichtungsgrade führen zu abriebsstabilen Granulaten, die wiederum erwünscht sind. Dabei muß allerdings beachtet werden, daß zu hohe Preßdrucke die Verfahrenssicherheit beeinträchtigen, da bei ihrem Einsatz das Material auf den Walzen plastifiziert wird und zu Anklebungen führt. Dieser unerwünschte Effekt tritt dann auf, wenn eine Erhöhung des Preßdruckes keine weitere Verdichtung des Materials mehr bewirkt und die jetzt zusätzlich eingetragene Preßkraft vorwiegend eine Erwärmung und Plastifizierung des Materials z. B. durch partielles Aufschmelzen von Bestandteilen verursacht.

Die jeweils anzuwendende optimale Preßkraft ist dabei rezepturabhängig. Üblicherweise wird erfindungsgemäß im Walzenspalt mit einer spezifischen Preßkraft im Bereich von etwa 15 bis 30 kN/cm Walzenlänge gearbeitet, wobei besonders bevorzugt der Bereich von etwa 20 bis 25 kN/cm Walzenlänge sein kann.

Ein weiteres wichtiges Merkmal der kompaktierend angefertigten Entschäumergranulate ist die z. B. quecksilberporosimetrisch gemessene Gesamtporosität. Sie ist ein direktes Maß für den Verdichtungsgrad der Aufmischungen und sollte unter 10 %, vorzugsweise unter 7,5 % liegen.

Die dabei eingestellten Feststoffdichten im Kompaktat liegen bevorzugt bei wenigstens etwa 1,7 g/cm³. Besonders geeignet sind entsprechende Feststoffdichten von wenigstens etwa 1,8 bis über 2 g/cm³. Auch hier sind der jeweils einzustellende optimale Dichtewert und die Teilchenporosität rezepturabhängig. Typisch sind Feststoffdichten von 2 bis 2,5 g/cm³ bei Gesamtporositäten von 6 bis 7 %.

Neben der Einstellung optimaler Preßdrucke im Walzenspalt ist zur Erreichung der erwünschten Schüttgewichte der granulierten rieselfähigen Reinigungsmittel die Einstellung der Dicke des platten- bzw. bandförmigen Kompaktates von Bedeutung. Ist die gewählte Schülpendicke deutlich kleiner als die gewünschte Kornobergrenze des herzustellenden granulierten Produktes, so werden bei der Zerkleinerung des zunächst anfallenden plattenförmigen Kompaktats plättchenförmige Partikel erhalten, die zu Schüttungen mit hohem Leerraumvolumen und daher vergleichsweise geringem Schüttgewicht führen. Bei höheren Kompaktatdicken werden in der anschließenden Zerkleinerung dagegen Partikel erhalten, deren Abmessungen sich dem an sich gewünschten Verhältnis von 1 : 1 : 1 annähern können. Eine solche Kornform führt zu dichteren Schüttungen, deren Leerraumvolumen maximal etwa 50 % beträgt. Zwar ist dieser Wert im Vergleich zu Schüttungen aus kugelähnlichen Teilchen noch immer relativ hoch - dort liegen übliche entsprechende Werte bei etwa 35 bis 45 % - jedoch kann ein etwas höheres Leerraumvolumen im Sinne des erfindungsgemäßen Handelns auch Vorteile mit sich bringen. Hierdurch wird nämlich offenbar der Einspülvorgang begünstigt im Sinne eines ungehinderten Wasserflusses durch die Schüttung.

Die Abriebfestigkeit der siebklassierten Granulatteilchen ist meist deutlich von der zugrundeliegenden Schülpendicke abhängig. Es ist günstig, die Schülpendicke nicht zu groß zu wählen, da die mechanische Stabilität bzw. Härte in diesem Fall erfahrungsgemäß abnimmt. Zweckmäßigerweise sind Schülpenstärken einzustellen, die etwa das 0,5-bis 5-, vorzugsweise jedoch das 1-bis 2fache der Kornobergrenze darstellen.

Mit gutem Erfolg können auch nach Zugabe geeigneter Zusätze Pelletierwalzen verwendet werden, wobei i. a. die vorstehend genannten Arbeitsbedingungen eingehalten werden. Der Prozeß erfordert jedoch eine rezepturmäßige Anpassung der Vormischung (Plastifizier-und Gleitmittelzusätze).

Die Kompaktierung kann auch nach Zugabe geeigneter Zusätze in Schneckenpressen, die mit einer Lochscheibe geeigneter Größe ausgerüstet sind, vorgenommen werden. Auch in diesem Falle soll die eingegebene Menge in bezug auf die Förder-und Verdichtungsleistung so abgestimmt werden, daß der Grenzdruck, bei dem keine weitere Verdichtung mehr erfolgt, nicht wesentlich überschritten wird. Dieser Grenzdruck läßt sich beispielsweise anhand der Wärmeentwicklung in der Extrudiervorrichtung bestimmen. Ein überhöhter Druck führt zu einer erhöhten Wärmeentwicklung und Plastifizierung, die vermieden werden sollten. DAs Extrudat wird ebenfalls auf die angegebene Korngröße zerkleinert, wozu sich übliche Mahlvorrichtungen eignen.

Das im erfindungsgemäßen Verfahren nach der Zerkleinerung anfallende Granulat kann in einer besonderen Ausführungsform der Erfindung auch noch weiter verformt werden. Hier wird das primär anfallende Granulat einem oberflächlichen Abrieb von Ecken und Kanten unterworfen und damit insbesondere auch das Schüttgewicht des gekörnten Gutes nochmals erhöht bzw. das Leerraumvolumen entsprechend verringert. Zum Zwecke einer solchen Nachbehandlung kann beispielsweise das primär anfallende Granulat auf rotierenden Scheiben gerollt werden, die auf ihrer Oberseite eine Riffelung aufweisen. Falls erforderlich wird anschließend ein unerwünschter Feinanteil nochmal abgetrennt und wiederum der Kompaktierung im Walzenspalt zugeführt.

Die im fertigen rieselfähigen Agglomerat angestrebte Kornobergrenze liegt im Bereich von etwa 1,6 bis 2 mm, während andererseits Feinanteile unterhalb etwa 0,2 mm unerwünscht sind. Die bevorzugten rieselfähigen Agglomerate zeigen dementsprechend ein breites Korngrößenspektrum im Bereich von etwa 0,2 bis 1,6 mm.

Entgegen den Erwartungen wird die Einspülbarkeit der Granulate und die Freisetzung der Schauminhibitoren durch höhere Preßdrucke und damit durch höhere Feststoffdichten begünstigt und nicht etwa verschlechtert. Offenbar neigen Schüttungen aus härteren Partikeln weniger zum Verklumpen und bilden auch während des Einspülvorganges weniger Feinanteile, so daß hier ein ungehinderter Wasserdurchfluß durch die Schüttung begünstigt wird.

Die Anwendung der vorliegenden Erfindung führt demnach zu folgenden überraschenden Effekten:

-Durch den Einsatz von neutralen bzw. nur wenig alkalischen, kristallinen, wasserlöslichen Salzen als Trägermaterial und durch die kompaktierende Konfektionierung sind Schaum inhibitorkonzentrate zugänglich, die keinen Wirksamkeitsverlust im Vergleich zum Entschäumer-Wirkstoff zeigen.

-Die kompaktierende Konfektionierung führt überdies zu einer sehr guten Stabilität des Konzentrates im Waschmittel, die möglicherweise auf der kapillaren Fixierung des Wirkstoffes im Kompaktatkorn beruht. Eine ähnliche, vom Verfahren her aufwendigere Stabilisierung wird durch Coating erreicht. Das Kompaktierverfahren, das zu einer gleichmäßigen, feinen Verteilung des Entschäumerwirkstoffs in einem nahezu porenfreien, mechanisch stabilen, inerten Feststoffagglomerat führt, stellt einen Sonderfall der Matrixverkapselung von Wirkstoffen dar.

Beispiel 1:

Eine in einem mit pflugscharförmigen Mischorganen ausgerüsteten Mischer (LÖDIGE-Mischer) hergestellte Aufmischung von 1 kg Silikon-Schauminhibitor mit 19 kg kristallinem wasserfreiem Natriumsulfat wurde mit 100 bar Walzendruck kompaktiert. Die erhaltenen 2-mm-Schülpen wurden nach Kühlung auf einem Reibschnitzler (1,5 mm Löcher) vermahlen und über ein Rüttelsieb (Allgaier-Sieb) auf eine Korngröße von 0,2 bis 1,25 mm fraktioniert. Das Gutkorn (Ausbeute ca. 70 %) besaß ein Schüttgewicht von 1,18 g/cm³, eine -scheinbare Teilchendichte von 2,34 g/cm³ und ein Gesamt-Porenvolumen von 6,6 %. Es zeigte nach 8wöchiger Lagerung in Waschmitteln mit besonders schaumintensiver Tensidkombination in der Klimazelle (30 °C, 80 % Luftfeuchte) keinen Aktivitätsverlust.

Beispiel 2:

Ein Gemisch von 5 % Silikonentschäumer, 10 % Polyglykoletherwachs (Polywachs 2000 ®) und 85 % kristallinem wasserfreien Natriumsulfat (Schwersulfat) wurde bei 50 °C durch eine 2-mm-Lochplatte extrudiert. Nach Kühlung wurde das Extrudat vermahlen (1,6-mm-Siebgranulator) und siebklassiert (0,2 bis 1,25 mm) und ergab ca. 70 % Gutkorn, das im Waschversuch der Reinsubstanz entsprechende Schaumkurven zeigte.

Beispiel 3:

Ein Gemisch von 5 % Silikonentschäumer, 7 % Wasser, 3 % Carboxymethylcellulose und 85 % Schwersulfat wurde durch eine 4,8 × 32-mm-Matrize pelletisiert (CPM-Pelletierpresse). Die Kühlung ergab Strukturen mit guter mechanischer Härte, die nach Mahlung (Hammerkorbmühle mit 4-mm-Einsatz) und Siebung (0,2 bis 1,25 mm) zu einem Produkt mit im Vergleich zur Reinsubstanz unverminderter Schaumbremsleistung führten. Die Lagerstabilität unter den in Beispiel 1 beschriebenen Bedingungen war ausreichend, während die nicht kompaktierte Vormischung im Lagertest in ca. 4 Wochen weitgehend desaktiviert war.

Beispiel 4:

Eine bei 95 °C im Mischer (LÖDIGE-Mischer) angefertigte Mischung von Natriumsulfat mit 5 % Paraffinentschäumerschmelze ergab nach Walzenkompaktierung (Alexanderwalze) und Kühlung mechanisch feste 2-mm-Schülpen, die nach Mahlung (Siebgranulator, 1,6-mm-Einsatz) und Siebung (0,2 bis 1,25 mm) zu ca. 60 % Gutkorn mit guter Schaumbremsleistung und Lagerstabilität führten.

Beispiel 5:

Eine Kaltaufmischung von 5 % Paraffinentschäumer-Prills (Korngröße ca. 0,1 bis 0,8 mm) mit 12,5 % Polywachs 2000 ® und 82,5 % Schwersulfat wurde bei 50 °C durch eine 2-mm-Lochplatte extrudiert, gekühlt, gemahlen (1,6-mm-Siebgranulator) und siebklassiert (0,2 bis 1,25 mm). Das erhaltene Inhibitorkonzentrat besaß der Reinsubstanz entsprechende Schaumbremseigenschaften. Die Schaumbremsleistung blieb im Klima-Lagertest weitgehend erhalten.

**Ansprüche**

1. Verfahren zur Herstellung eines rieselfähigen Schauminhibitor-Konzentrates, dadurch gekennzeichnet, daß man ein inniges Gemisch, bestehend aus (auf wasserfreie Substanz bezogen):

a) 1 bis 20 Gew.-% mindestens eines Schauminhibierungsmittels aus der Klasse der Paraffinkohlenwasserstoffe, der Organopolysiloxane und ihrer Gemische mit feinteiligen hydrophoben Feststoffkomponenten und

b) 80 bis 99 Gew.-% eines wasserlöslichen Salzes oder eines in der Hauptsache aus Salzen unter Zusatz geeigneter Konfektionierungshilfsmittel bestehenden Gemisches, das in 1%iger wäßriger Lösung einen pH-Wert von 6 bis 9,5 aufweist,

unter erhöhtem Druck kompaktiert und dabei den Grenzdruck nicht wesentlich überschreitet, bei dem eine weitere Verdichtung nicht mehr auftritt, worauf man das Kompaktat, dessen quecksilberporosimetrisch gemessene Teilchen-Gesamtporosität unter 10 %, vorzugsweise unterhalb 7 % liegt, auf eine mittlere Korngröße von 0,1 bis 2 mm zerkleinert.

2. Verfahren nach Anspruch 1, dadurch gekennzeichnet, daß man als Komponente (b) Natriumsulfat verwendet.

3. Verfahren nach den Ansprüchen 1 und 2, dadurch gekennzeichnet, daß man die Kompaktierung im Walzenspalt vornimmt.

4. Verfahren nach den Ansprüchen 1 und 2, dadurch gekennzeichnet, daß man die Kompaktierung mittels Schneckenpressen vornimmt.

5. Verfahren nach den Ansprüchen 1 und 2, dadurch gekennzeichnet, daß man die Kompaktierung mittels einer Pelletierpresse vornimmt.

6. Verfahren nach den Ansprüchen 1 bis 5, dadurch gekennzeichnet, daß man dem Vorgemisch bis zu 15 Gew.-% eines wasserlöslichen bzw. in Wasser quellbaren Polymeren zusetzt.

7. Verfahren nach den Ansprüchen 1 bis 6, dadurch gekennzeichnet, daß man 2 bis 10 Gew.-% des Schauminhibierungsmittels in das Vorgemisch einsetzt.

8. Verfahren nach den Ansprüchen 1 bis 7, dadurch gekennzeichnet, daß man das Kompaktat auf eine Korngröße von 0,2 bis 1,5 mm zerkleinert und feinere bzw. gröbere Bestandteile abtrennt.